# EUROPÄISCHE PATENTSCHRIFT

(11) **EP 0 790 720 B1**
(45) Veröffentlichungstag und Bekanntmachung des Hinweises auf die Patenterteilung: **29.12.2004**
(21) Anmeldenummer: 97400349.3
(22) Anmeldetag: 17.02.1997
(51) Int. Cl.: H04J 13/00

(54) **Optisches frequenzkodiertes CDMA-Übertragungssystem und optischer Empfänger dafür**
Optical frequency coded CDMA-transmission system and optical receiver for such a system
Système CDMA de transmission optique de signaux codés en fréquence et récepteur optique associé

(30) Priorität: 15.02.1996 DE 19605567
(43) Veröffentlichungstag der Anmeldung: 20.08.1997
(73) Patentinhaber: ALCATEL, 75008 Paris (FR)
(72) Erfinder: Pfeiffer, Thomas, Dr., 70569 Stuttgart (DE)
(74) Vertreter: Knecht, Ulrich Karl, Dipl.-Ing.

(56) Entgegenhaltungen:
- EP-A- 0 461 583
- MESTDAGH D: "SUBCARRIER DIVISION MULTIACCESS NETWORKS" , FUNDAMENTALS OF MULTIACCESS OPTICAL FIBER NETWORKS, NORWOOD, ARTECH HOUSE, US, PAGE(S) 291-323 XP000199613 ISBN: 0-89006-666-3 * Einleitung * * Kapitel 8.1 * * Kapitel 8.3, Absatz 3 * * Abbildungen 8.1,8.2,8.7 *
- KAVEHRAD M ET AL: "AN EXPERIMENT ON A CDM SUBCARRIER MULTIPLEXED OPTICAL-FIBER LOCAL AREA NETWORK" IEEE PHOTONICS TECHNOLOGY LETTERS, IEEE INC. NEW YORK, US, Bd. 4, Nr. 7, 1. Juli 1992 (1992-07-01), Seiten 793-796, XP000289316 ISSN: 1041-1135
- MOELLER L: "AN OPTICAL CDMA METHOD BASED ON PERIODIC SPECTRUM ENCODING" PROCEEDINGS OF THE ANNUAL CONFERENCE ON EUROPEAN FIBRE OPTIC COMMUNICATIONS AND NETWORKS (EFOC), XX, XX, 27. Juni 1995 (1995-06-27), Seiten 178-181, XP000672568
- STRACHAN G R ET AL: "AN OPTICAL CORRELATION RECEIVER EMPLOYING PHASE MODULATED OPTICAL ORTHOGONAL CODES" PROCEEDINGS OF THE CONFERENCE ON LASERS AND ELECTRO-OPTICS EUROPE. (CLEO/EUROPE) AMSTERDAM, AUG. 28 - SEPT. 2, 1994, NEW YORK, IEEE, US, 28. August 1994 (1994-08-28), Seite 306 XP000475357 ISBN: 0-7803-1789-0

## Beschreibung

Die Erfindung betrifft ein optisches Übertragungssystem nach dem Oberbegriff des Anspruchs 1. Außerdem betrifft die Erfindung einen optischen Empfänger nach dem Oberbegriff des Anspruchs 2.

Aus der Veröffentlichung von L. Möller, "An Optical CDMA Method Based on Periodic Spectrum Encoding", Proceedings of the Thirteenth Annual Conference on European Fibre Optic Communications and Networks, Brighton, England, 1995, Seiten 178 bis 181 ist ein optisches Übertragungssystem bekannt, bei dem ein optisches CDMA-Verfahren angewendet wird, das auf einer periodischen Spektrumskodierung beruht. Aus dieser Veröffentlichung sind auch optische Sender und Empfänger für ein solches optisches Übertragungssystem bekannt. Die optischen Sender und Empfänger sind an ein Lichtwellenleiternetz angeschlossen, dessen Struktur durch einen N x N Sternkoppler festgelegt ist.

Bei dem beschriebenen optischen CDMA-Verfahren wird das Leistungsdichtespektrum einer Lichtquelle einer periodischen Spektrumskodierung unterworfen. Die Lichtquelle ist eine Leuchtdiode, die über einen weiten Wellenlängenbereich Licht aussendet, d. h. ihr Spektrum hat eine große Bandbreite (z. B. eine Halbwertsbreite von 60 nm). Jeder optische Sender hat eine Leuchtdiode und ein periodisches optisches Filter, das z. B. ein Fabry-Perot Filter oder ein Mach-Zehnder Interferometer ist. Licht der durch ein Datensignal direkt modulierten Leuchtdiode wird dem periodischen optischen Filter zugeführt, das eine periodische Transmissionscharakteristik hat. Parameter dieser periodischen Transmissionscharakteristik sind der Abstand der periodisch auftretenden Durchlaßbereiche (free spectral range, FSR) und die Halbwertsbreite eines Durchlaßbereiches (half-power bandwidth, ΔF). Diese Parameter hängen z. B. beim Fabry-Perot Filter vom Spiegelabstand ab.

In der Veröffentlichung ist angegeben, daß es noch weitere Möglichkeiten zur Spektrumskodierung gibt, z. B. die Verwendung von Multimodelasern.

Dem N x N Sternkoppler zugeführtes Licht hat somit ein periodisches Spektrum, d. h. im Leistungsdichtespektrum gibt es in regelmäßigen Abständen Bereiche hoher Leistungsdichte und Bereiche sehr geringer Leistungsdichte. Jeder optische Sender sendet Licht aus, das ein für ihn charakteristisches frequenzkodiertes (periodisches) Spektrum hat; der FSR stellt das Codewort dar.

Jeder optische Empfänger (s. Bild 1 der Veröffentlichung) hat einen Koppler, durch den von den optischen Sendern gesendetes Licht auf zwei Wege aufgeteilt wird. Im ersten Weg ist ein Photodetektor vorhanden, der das Licht in ein elektrisches Signal wandelt, das ein Verstärker verstärkt und einem Eingang eines Differenzverstärker zuführt. Im zweiten Weg ist ein durchstimmbares periodisches optisches Filter und ein Photodetektor vorhanden, die so angeordnet sind, daß das Licht zuerst durch das periodische optische Filter läuft, bevor es auf den Photodetektor trifft. Das vom Photodetektor erzeugte elektrische Signal wird einem weiteren Eingang des Differenzverstärkers zugeführt. Der Ausgang des Differenzverstärkers ist mit einer Entscheiderschaltung verbunden.

Bei dem optischen Übertragungssystem erfolgt die Dekodierung im optischen Teil des Empfängers durch das periodische optische Filter. Eine optimale Dekodierung erfolgt, wenn gilt: FSR_{Sender} = FSR_{Empfänger}. Dies bedeutet, daß das periodische optische Filter im optischen Empfänger exakt auf das periodische optische Filter im optischen Sender eingestellt werden muß. Hinzukommt, daß das einmal eingestellte periodische optische Filter frequenzstabilisiert werden muß, was einen großen Aufwand erfordert.

Der Erfindung liegt die Aufgabe zugrunde, ein optisches Übertragungssystem anzugeben, bei dem die Dekodierung auf eine einfachere und damit billigere Weise erfolgt. Ein diese Aufgabe lösendes optisches Übertragungssystem ist Gegenstand des Anspruchs 1. Der Erfindung liegt außerdem die Aufgabe zugrunde, einen optischen Empfänger für ein optisches Übertragungssystem anzugeben. Der optische Empfänger ist Gegenstand des Anspruchs 2. Vorteilhafte Ausgestaltungen der Erfindung sind in den Unteransprüchen angegeben.

Aus dem Grundgedanken der Erfindung heraus, nämlich daß die Dekodierung nicht im optischen Teil des optischen Empfängers sondern in seinem elektrischen Teil erfolgt, ergeben sich folgende Vorteile: Ein im optischen Empfänger vorhandenes elektrisches Bandpassfilter kann auf einfache Weise elektrisch durchgestimmt werden; dadurch können die Codewörter (FSR) in den Sendern flexibler gewählt werden. Bei elektrischen Filtern ist außerdem die eingestellte Filtercharakteristik stabiler als bei optischen Filtern.

Die Dekodierung im elektrischen Teil des optischen Empfängers ermöglicht auch sendeseitige Maßnahmen, die die Flexibilität des optischen Übertragungssystems erhöhen. Zu diesen Maßnahmen gehört, daß im optischen Sender an Stelle eines periodischen optischen Filters ein nicht periodisches optisches Filter verwendet wird.

Die Erfindung wird im folgenden anhand von Ausführungsbeispielen näher erläutert. Es zeigen:
- Fig. 1: ein schematisches optisches Übertragungssystem mit einem ersten Ausführungsbeispiel eines optischen Empfängers, und
- Fig. 2: ein zweites Ausführungsbeispiel eines optischen Empfängers.

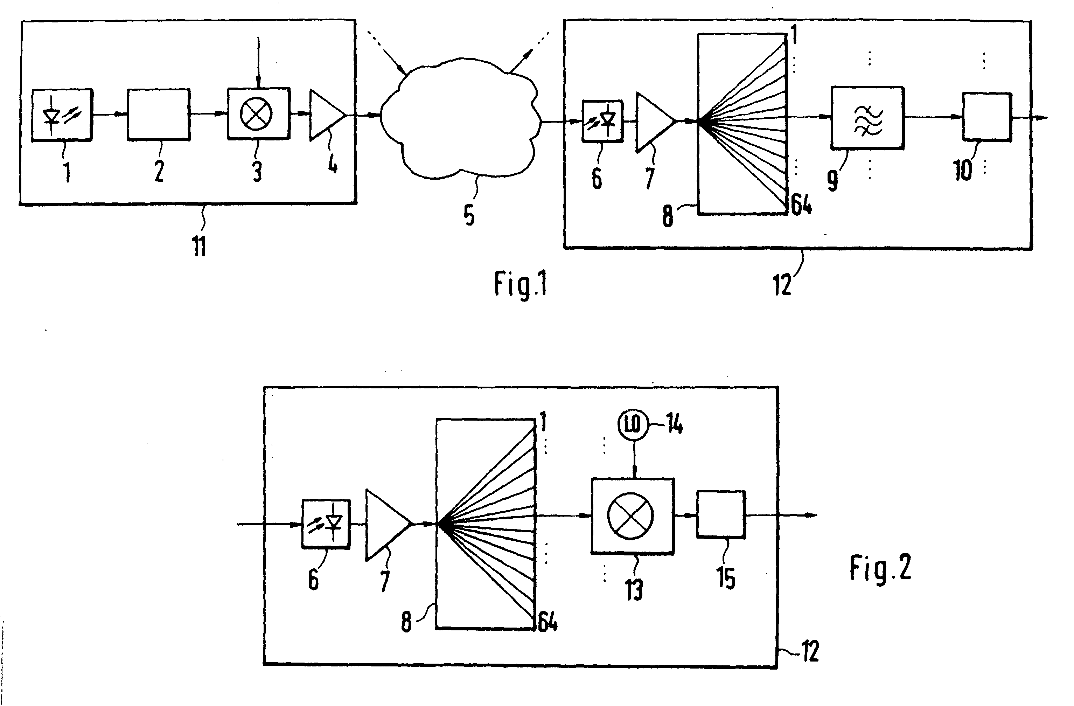

In Fig. 1 ist ein optisches Übertragungssystem mit einem ersten Ausführungsbeispiel eines optischen Empfängers schematisch dargestellt. An ein Lichtwellenleiternetz 5 sind ein optischer Sender 11 und ein optischer Empfänger 12 angeschlossen. An das Lichtwellenleiternetz 5 können mehrere optische Sender 11 und mehrere optische Empfänger 12 angeschlossen sein; dies ist durch Pfeile angedeutet, die zum Lichtwellenleiternetz 5 hin oder davon weg zeigen. Die Struktur des optischen Übertragungssystem kann aber auch eine Baumstruktur sein, wie sie bei sogenannten Fiber-in-the-Loop (FITL) Systemen vorliegt. Von einer Zentrale aus werden z. B. Fernsehsignale über ein Lichtwellenleiternetz verteilt, die für Teilnehmer bestimmt sind, die mit optischen Netzabschlüssen verbunden sind. In den optischen Netzabschlüssen sind optische Sender vorhanden, um Aufwärtssignale zur Zentrale zu senden. Diese Sender sind wie der in Fig. 1 im Detail gezeigte optische Sender 11 ausgestaltet. Entsprechend ist in der Zentrale ein optischer Empfänger 12 vorhanden.

Der beispielhaft gezeigte Sender 11 hat folgende von links nach rechts angeordnete und miteinander verbundene Bestandteile: Eine Leuchtdiode 1 als Lichtquelle, ein periodisches optisches Filter 2, einen optischen Modulator 3 und einen optischen Verstärker 4. Von der Leuchtdiode 1 ausgesendetes Licht, dem das periodische optische Filter 2 ein periodisches Leistungsdichtespektrum aufprägt, wird durch den optischen Modulator 3 extern moduliert. Der optische Modulator 3 wird durch ein Datensignal gesteuert. Die Leuchtdiode 1 kann prinzipiell auch direkt moduliert werden (s. L. Möller). Das periodische optische Filter 2 ist z. B. ein Fabry-Perot Filter, das einen FSR von ca. 10 GHz (= 0,1 nm) hat, und das auch in faserkompatibler Ausführung erhältlich ist.

Bei dem gezeigten optischen Übertragungssystem werden Signale mittels dem bekannten optischen CDMA-Verfahren übertragen, das auf periodischer Spektrumskodierung beruht (s. L. Möller). Das vom periodischen optischen Filter 2 erzeugte periodische Leistungsdichtespektrum wird im folgenden als frequenzkodiertes Spektrum bezeichnet. Der Sender 11 führt dem Lichtwellenleiternetz 5 somit Licht zu, das ein für ihn charakteristisches frequenzkodiertes Spektrum hat; dadurch ist eine Unterscheidung der im optischen Übertragungssystem vorhandenen Sender möglich. In dem gezeigten optischen Übertragungssystem kann prinzipiell auch ein anderer optischer Sender eingesetzt werden, z. B. der aus der Veröffentlichung von L. Möller bekannte optische Sender; wichtig ist, daß der optische Sender Licht aussendet, das ein frequenzkodiertes Spektrum hat.

Der optische Empfänger 12 hat folgende von links nach rechts angeordnete und miteinander verbundene Bestandteile: Einen Photodetektor 6, einen Verstärker 7, einen Verzweiger 8, ein Bandpassfilter 9 und einen Demodulator 10. Das Bandpassfilter 9 und der Demodulator 10 sind Teil einer Dekodiereinrichtung. Der Photodetektor 6, der für Signale einer hohen Trägerfrequenz im Bereich von ca. 10 GHz geeignet ist (z. B. eine pin-Photodiode), wandelt empfangenes Licht in ein elektrisches Signal, das der Verstärker 7 verstärkt. Der Verzweiger 8 teilt das an einem Ausgang des Verstärkers 7 austretende verstärkte elektrische Signal auf z. B. 64 Ausgänge auf. An jeden der 64 Ausgänge, die 64 Kanäle gebildet werden, ist ein Bandpassfilter 9 angeschlossen, dem ein Demodulator 10 nachgeschaltet ist. Für den Verstärker 7 und für noch zu erwähnende Verstärker gilt, daß sie entsprechende Verstärkerparameter (Verstärkung, Bandbreite) haben, um die vorkommenenden elektrischen Signale optimal zu verstärken. Je nach Anwendungsfall können die Verstärker entfallen oder es können noch weitere Verstärker hinzugefügt werden.

Am Photodetektor 6 kommt das vom Sender 11 ausgesendete Licht an. Für den üblichen Fall, daß mehrere an das Lichtwellenleiternetz 5 angeschlossene Sender Licht aussenden, kommt am Photodetektor 6 Licht an, das aus mehreren charakteristischen frequenzkodierten Spektren besteht. Diese charakteristischen frequenzkodierten Spektren überlagern sich beim Auftreffen auf die lichtempfindliche Fläche des Photodetektors 6, wodurch eine Vielzahl von Differenzfrequenzen im GHz-Bereich gebildet werden. Das entstehende elektrische Signal hat ein Spektrum, das aus einer Vielzahl von Spektrallinien besteht. Jeder Spektrallinie sind zwei Seitenbänder zugeordnet. Da jede Spektrallinie aus einer Überlagerung eines charakteristischen frequenzkodierten Spektrums mit sich selbst und mit anderen charakteristischen frequenzkodierten Spektren hervorgeht, treten die Spektrallinien bei vorher feststehenden Frequenzen auf, die im Rahmen der Netzplanung festgelegt wurden. Eine gewünschte Spektrallinie kann somit durch das Bandpassfilter 9 von den anderen Spektrallinien getrennt und durch den Demodulator 10 demoduliert werden. Das Bandpassfilter 9 hat eine Mittenfrequenz von z. B. 10 GHz, weitere im optischen Empfänger 12 vorhandene Bandpassfilter 9 können Mittenfrequenzen haben, die sich untereinander z. B. um 1 GHz unterscheiden. Das im Basisband vorliegende demodulierte elektrische Signal tritt an einem Ausgang des Demodulators 10 aus und kann einer weiteren Signalverarbeitung zugeführt werden.

In Fig. 2 ist ein zweites Ausführungsbeispiel eines optischen Empfängers 12 gezeigt. Für in Fig. 1 bereits gezeigte Bestandteile des optischen Empfängers 12 werden die gleichen Bezugszeichen verwendet. Dieses zweite Ausführungsbeispiel des optischen Empfängers 12 unterscheidet sich von dem in Fig. 1 gezeigten dadurch, daß an jeden Ausgang (Kanal) des Verzweigers 8 ein Modulator 13 angeschlossen ist, der ein Oszillatorsignal konstanter Oszillatorfrequenz durch das vom Photodetektor 6 erzeugte elektrische Signal moduliert. Das Oszillatorsignal wird von einem lokalen Oszillator 14 erzeugt, der mit dem Modulator 13 verbunden ist. Im optischen Empfänger 12 sind weitere (z. B. 63) lokale Oszillatoren 14 vorhanden. Jeder dieser lokalen Oszillatoren 14 erzeugt ein Oszillatorsignal konstanter Oszillatorfrequenz, die für jeden Kanal unterschiedlich ist. Der lokale Oszillator 14 ist z. B. ein spannungsgesteuerter Oszillator (VCO), dessen Aufbau und Funktionsweise allgemein bekannt sind.

Wie das aus dem Modulator 13 austretende elektrische weiterverarbeitet wird, hängt von der Wahl der Oszillatorfrequenzen ab: Jede Oszillatorfrequenz kann so gewählt werden, daß sie gleich der in diesem Kanal zu selektierenden Trägerfrequenz ist (Homodynempfang). Jede Oszillatorfrequenz kann aber auch so gewählt werden, daß sie ungleich der in diesem Kanal zu selektierenden Trägerfrequenz ist (Heterodynempfang).

Im Falle des Homodynempfanges ist mit dem Ausgang des Modulators 13 ein Tiefpassfilter 15 verbunden; dieser Fall ist in Fig. 2 gezeigt. Das Tiefpassfilter 15 läßt das im Basisband vorliegende elektrische Signal nahezu ungedämpft durch und sperrt Anteile von evtl. anderen Signalen, die oberhalb einer für das Tiefpassfilter 15 festgelegten Grenzfrequenz liegen.

Im Falle des Heterodynempfanges ist mit dem Ausgang des Modulators 13 ein Bandpassfilter verbunden, an das ein Demodulator angeschlossen ist.

Der Modulator 13, der lokale Oszillator 14 und die je nach Empfangsverfahren notwendigen Bestandteile sind Teil einer Dekodiereinrichtung, durch die im frequenzkodierten Spektrum enthaltene Information zurückgewonnen werden kann.

## Patentansprüche

1. Optisches Übertragungssystem, bei dem mindestens ein optischer Sender (11) und mindestens ein optischer Empfänger (12) an ein Lichtwellenleiternetz (5) angeschlossen sind, und bei dem der mindestens eine optische Sender (11) dem Lichtwellenleiternetz (5) Licht zuführt, das ein für den mindestens einen optischen Sender (11) charakteristisches frequenzkodiertes Spektrum hat,
**dadurch gekennzeichnet,**
**dass** der mindestens eine optische Empfänger (12) einen einzigen Photodetektor (6) zum Wandeln des empfangenen Lichtes in ein elektrisches Signal hat, und dieser direkt oder indirekt mit einer elektrischen Dekodiereinrichtung (9, 10; 13, 14, 15) zum Zurückgewinnen der im charakteristischen frequenzkodierten Spektrum enthaltenen Information verbunden ist.

2. Optischer Empfänger (12) für ein optisches Übertragungssystem, bei dem mindestens ein optischer Sender (11) an ein Lichtwellenleiternetz (5) angeschlossen ist, und bei dem der mindestens eine optische Sender (11) dem Lichtwellenleiternetz (5) Licht zuführt, das ein für den mindestens einen optischen Sender (11) charakteristisches frequenzkodiertes Spektrum hat, dessen Eingangssignal Licht mit einem Spektrum ist, das aus mindestens einem charakteristischen frequenzkodierten Spektrum besteht, **dadurch gekennzeichnet daß** der optische Empfänger einen einzigen Photodetektor (6) zum Wandeln des empfangenen Lichtes in ein elektrisches Signal hat, und dieser direkt oder indirekt mit einer elektrischen Dekodiereinrichtung (9, 10; 13, 14, 15) zum Zurückgewinnen der im charakteristischen frequenzkodierten Spektrum enthaltenen Information verbunden ist.

3. Optisches Übertragungssystem nach Anspruch 1 oder optischer Empfänger nach Anspruch 2, **dadurch gekennzeichnet, daß** die elektrische Dekodiereinrichtung (9, 10; 13, 14, 15) ein Bandpassfilter (9) zum Filtern des elektrischen Signal und einen Demodulator (10) zum Demodulieren des vom Bandpassfilter (9) kommenden elektrischen Signals hat.

4. Optisches Übertragungssystem nach Anspruch 1 oder optischer Empfänger nach Anspruch 2, **dadurch gekennzeichnet, daß** die elektrische Dekodiereinrichtung (9, 10; 13, 14, 15) einen Modulator (13) zum Modulieren eines von einem Oszillators (14) erzeugten Signals konstanter Frequenz mit dem elektrischen Signal und ein Tiefpassfilter (15) zum Filtern des vom Modulator (13) kommenden elektrischen Signals hat.

5. Optisches Übertragungssystem nach Anspruch 1 oder optischer Empfänger nach Anspruch 2, **dadurch gekennzeichnet, daß** die Dekodiereinrichtung (9, 10; 13, 14, 15) einen Modulator (13) zum Modulieren eines von einem Oszillators (14) erzeugten Signals konstanter Frequenz mit dem elektrischen Signal, ein mit dem Modulator (13) verbundenes Bandpassfilter und einen Demodulatorzum Demodulieren des vom Bandpassfilter kommenden elektrischen Signals hat.

## Claims

1. An optical transmission system wherein at least one optical transmitter (11) and at least on optical receiver (12) are connected to a fiber-optic network (5), and wherein the at last one optical transmitter (11) feeds light into the fiber-optic network (5) which has a frequency-encoded spectrum characteristic of the at least one optical transmitter (11),
**characterized in**
**that** the at least one optical receiver (12) comprises a single photodetector (6) for converting the received light into an electric signal, and that this photodetector (6) is connected directly or indirectly to an electrical decoding facility (9, 10; 13, 14, 15) for recovering the information contained in the characteristic frequency-encoded spectrum.

2. An optical receiver (12) for an optical transmission system wherein at least one optical transmitter (11) is connected to a fiber-optic network (5), and wherein the at least one optical transmitter (11) feeds light into the fiber-optic network (5) which has a frequency-encoded spectrum characteristic of the at least one optical transmitter (11), the input to the optical receiver being light with a spectrum consisting of at least one characteristic frequency-encoded spectrum,
**characterized in**
**that** the optical receiver comprises a single photodetector (6) for converting the received light into an electric signal, and that this photodetector is connected directly or indirectly to an electrical decoding facility (9, 10; 13, 14, 15) for recovering the information contained in the characteristic frequency-encoded spectrum.

3. An optical transmission system as claimed in claim 1 or an optical receiver as claimed in claim 2, **characterized in that** the electrical decoding facility (9, 10; 13, 14, 15) comprises a bandpass filter (9) for filtering the electric signal and a demodulator (10) for demodulating the electric signal coming from the bandpass filter (9).

4. An optical transmission system as claimed in claim 1 or an optical receiver as claimed in claim 2, **characterized in that** the electrical decoding facility (9, 10; 13, 14, 15) comprises a modulator (13) for modulating a fixed-frequency signal generated by an oscillator (14) with the electric signal and a low-pass filter (15) for filtering the electric signal coming from the modulator (13).

5. An optical transmission system as claimed in claim 1 or an optical receiver as claimed in claim 2, **characterized in that** the decoding facility (9, 10; 13, 14, 15) comprises a modulator (13) for modulating a fixed-frequency signal generated by an oscillator (14) with the electric signal, a bandpass filter connected to the modulator (13), and a demodulator for demodulating the electric signal coming from the bandpass filter.

## Revendications

1. Système de transmission optique, dans lequel au moins un émetteur optique (11) et au moins un récepteur optique (12) sont reliés à un réseau de fibres optiques (5) et dans lequel le au moins un émetteur optique (11) conduit la lumière, qui a un spectre codé en fréquence caractéristique du au moins un émetteur optique (11), au réseau de fibres optiques (5),**caractérisé en ce que**
au moins un récepteur optique (12) comporte un seul photodétecteur (6) pour la conversion de la lumière reçue en un signal électrique, et celui-ci est relié directement ou indirectement à un dispositif de décodage électrique (9, 10 ; 13, 14, 15) pour la récupération des informations contenues dans le spectre caractéristique codé en fréquence.

2. Récepteur optique (12) pour un système de transmission optique, dans lequel au moins un émetteur optique (11) est relié à un réseau de fibres optiques (5), et dans lequel le au moins un émetteur optique (11) conduit la lumière, qui a un spectre codé en fréquence caractéristique du au moins un émetteur optique (11), au réseau de fibres optiques (5), le signal d'entrée du spectre étant la lumière avec un spectre qui est constitué d'au moins un spectre caractéristique codé en fréquence,**caractérisé en ce que**
le récepteur optique comporte un seul photodétecteur (6) pour la conversion de la lumière reçue en un signal électrique, et celui-ci est relié directement ou indirectement à un dispositif de décodage électrique (9, 10 ; 13, 14, 15) pour la récupération des informations contenues dans le spectre caractéristique codé en fréquence.

3. Système de transmission optique selon la revendication 1 ou récepteur optique selon la revendication 2, **caractérisé en ce que** le dispositif de décodage électrique (9, 10 ; 13, 14, 15) comprend un filtre passe-bande (9) pour le filtrage du signal électrique et un démodulateur (10) pour la démodulation du signal électrique provenant du filtre passe-bande (9).

4. Système de transmission optique selon la revendication 1 ou récepteur optique selon la revendication 2, **caractérisé en ce que** le dispositif de décodage électrique (9, 10 ; 13, 14, 15) comprend un modulateur (13) pour la modulation d'un signal à fréquence constante généré par un oscillateur (14) avec le signal électrique et un filtre passe-bas (15) pour le filtrage du signal électrique provenant du modulateur (13).

5. Système de transmission optique selon la revendication 1 ou récepteur optique selon la revendication 2, **caractérisé en ce que** le dispositif de décodage (9, 10 ; 13, 14, 15) comprend un modulateur (13) pour la modulation d'un signal à fréquence constante généré par un oscillateur (14) avec le signal électrique, un filtre passe-bande relié au modulateur (13) et un démodulateur pour la démodulation du signal électrique provenant du filtre passe-bande.
